# EUROPEAN PATENT APPLICATION

(11) **EP 4 597 314 A1**
(43) Date of publication of application: **06.08.2025**
(21) Application number: 25154940.8
(22) Date of filing: 30.01.2025
(51) Int. Cl.: G06F 9/455, G06F 21/53

(54) **SYSTEM AND METHOD FOR SECURE VIRTUAL MACHINE CONFIGURATION**

(30) Priority: 01.02.2024 US 202418430273
(71) Applicant: Microsoft Technology Licensing, LLC, Redmond, WA 98052 (US)
(72) Inventor: Shivaganga Nagaraju, Gangadhara Swamy, Redmond, WA 98052 (US); MacIver, Douglas M., Redmond, WA 98052 (US); Chitnis, Pushkar V., Redmond, WA 98052 (US); Abdullateef, Ahmad, Redmond, WA 98052 (US)
(74) Representative: Grünecker Patent- und Rechtsanwälte PartG mbB

(57) **Abstract**

A secure virtual machine configuration system comprises a host device implemented in a cloud service provider environment, a virtual machine implemented on the host, and a guest agent configured within the virtual machine. The guest agent includes a policy enforcement agent configured to monitor policies received therein from a tenant device over a secure communication channel between the tenant and the guest agent and to allow execution of software components that are specified within the policy enforcement agent.

## Description

### Background

Virtual machines (VMs) in a cloud environment enable a user to leverage off premises computing capabilities maintained by a Cloud Service Provider (CSP). In the cloud environment, software components referred as guest agents and extensions are used to manage the VMs. These components provide automation capabilities during and after VM provisioning for various functions and configurations. For example, a custom script extension makes it easier to run any script on a VM, a log analytics extension enables monitoring VM activities, and many more. Agents are responsible for running and configuring extensions that implements specific functionality.

Agents perform the work as commanded by CSP infrastructure components, meaning that agents inherently trust the commands/data coming from them. However, in some instances, a CSP customer or tenant may want to run their VM without needing to trust the CSP infrastructure components, specifically in the context of Confidential Computing. It is possible to deploy images without having agents and therefore any extensions, or even disable the agents and/or extensions, but this can remove some functionality for the tenant with respect to managing their VMs.

### Brief Description of the Drawings

FIG. 1 is a diagrammatic view of a tenant/CSP host environment;
FIG. 2 is a diagrammatic view of a tenant/CSP host environment showing potentially untrusted components in the system;
FIG. 3 is a diagrammatic view of a tenant/CSP host environment including a trusted agent configuration;
FIG. 4 is a flow chart of the operation of a tenant/CSP host environment including a trusted agent configuration; and
FIG. 5 is a diagrammatic view of a computer system and the virtual machine configuration process coupled to a distributed computing network.

Like reference symbols in the various drawings indicate like elements.

### Detailed Description

As will be discussed in greater detail below, implementations of the present disclosure are directed to implementing a guest agent of a VM as a trusted agent. A trusted agent is configured to implement policies that are fully controlled by the owner of the agent, or the tenant. This facilitates the agent enforcing policy to allow or disallow execution of extensions based on parameters set by the tenant. Further, the system is configured to enable the tenant to communicate a state or goal for the trusted agent in an encrypted manner to keep the state, including extensions, actions, and parameters confidential and integrity protected from the CSP infrastructure. The implementations of the disclosure may be implemented in, for example, a Confidential Computing (CC) environment.

Confidential computing is a paradigm in computer security that focuses on protecting data during processing, ensuring its confidentiality even when it is actively being used by applications or services. Unlike traditional security measures that primarily secure data at rest (storage) or in transit (communication), confidential computing addresses the vulnerabilities associated with data processing in untrusted environments, such as, for example, cloud servers or third-party infrastructure. Confidential computing has significant implications for sectors dealing with highly sensitive data, such as finance, healthcare, and sensitive research, as it provides an additional layer of protection for data during its entire lifecycle, even when it is actively being used for computation. This approach enhances trust in cloud computing environments and facilitates the secure execution of applications that require the highest levels of data confidentiality.

A Confidential Virtual Machine (CVM) is an offering in the CC portfolio that is being built to lower the trust requirement on the CSP at all the touch points. In CC configurations, CSP is part of the threat model due to the malicious elements that can creep into CSP's infrastructure through vulnerability exploitation, sabotaged personnel, and other malicious threats. Since any avenue that a malicious entity on the CSP's infrastructure can leverage to subvert the promises made by CC offerings is a big risk, addressing them is critical to the success and promise of the offering. The current architecture of agents and extension is one such risk to CVMs because the agent must fully trust the data flowing from the CSP infrastructure, which is an untrusted environment in the CVM's threat model.

Accordingly, implementations of the disclosure are directed to policy-based agents referred as trusted agents. Guest agents in the CVM are enhanced to implement policies that are fully controlled by the user. The agents will enforce the policies, such as type extensions, to run and the kind of inputs provided to the extensions. The policy and all the inputs are provided confidentially with integrity protection to the guest agent such that none of the CSP infrastructure elements can tamper with or inspect that information.

Guest agents and extensions are integral to the operation of the CSP environment. Guest agents and extensions provide automation capabilities during and after VM provisioning for various functions and configurations. For example, a custom script extension makes it easier to run any script on a VM and a log analytics extension enables monitoring VM activities.

Agents are responsible for running and configuring extensions. They also support other functional aspects of deploying and managing VMs. Images are preinstalled with the agents in environments running on both Windows from Microsoft and Linux. Agents are prerequisites for using extensions in VMs. There are two different agents: provisioning agent and the guest agent.

An agent in a virtual machine (VM) environment serves as a software component that facilitates communication and coordination between the VM and the underlying virtualization platform or management system. This agent plays a crucial role in enhancing the functionality, monitoring, and management of the VM. Acting as a liaison, the agent communicates information about the VM's state, performance metrics, and resource utilization to the hypervisor or management layer. This communication allows administrators to monitor the VM's health, troubleshoot issues, and make informed decisions regarding resource allocation and optimization. Additionally, agents often enable features such as guest OS customization, allowing for the automatic configuration of operating system settings during VM provisioning. Security agents within VMs can also assist in implementing security policies, monitoring for vulnerabilities, and facilitating the deployment of security patches. Accordingly, the agent in a VM environment acts as a bridge between the virtualized instance and the overarching management infrastructure, contributing to effective monitoring, management, and optimization of the virtualized resources.

Agents perform the work as commanded by cloud platform fabric through host agent/wire server, which means agents inherently trust the commands/data coming from the fabric. This trust can become undesirable in scenarios where customers or tenants want to run their VM without needing to trust cloud platform fabric. It is possible to deploy images without having agents and, accordingly, any extensions, or even to disable the agents and/or extensions, but this may remove certain functionality for the customers with respect to managing their VMs.

In the Confidential Computing (CC) domain, the trust model is inverted compared to the traditional cloud environment. In CC, the VM is configured to not trust the host or any parts of the cloud infrastructure on which it is hosted. The entire cloud infrastructure is considered a hostile environment against which the CC technology is designed to protect. CC is built on the Trusted Execution Environment (TEE) provided by hardware technologies (such as Intel SGX, Intel TDX and AMD SEV-SNP) to protect customers data within the VM during execution.

The current architecture of agents and extensions can pose a significant risk to the security promises of CC technology. Confidential Virtual Machines (CVMs) is an offering in the CC portfolio that is being built to lower requirements to trust on the cloud platform at all the touch points with the ultimate goal of completely removing it. As mentioned, for any CC offerings, the CSP is part of the threat model due to the malicious elements that can creep into CSP's infrastructure through vulnerability exploitation, sabotaged personnel, and other malicious threats. Any avenue that a malicious entity on the CSP's infrastructure can leverage to subvert the promises made by CC offerings can be a significant risk. Accordingly, addressing them is critical to the success and promise of the CC offering, since the current architecture of agents and extension is one such risk to CVMs because the agent fully trusts the data flowing from the CSP fabric, which is an untrusted environment in the CVM's threat model.

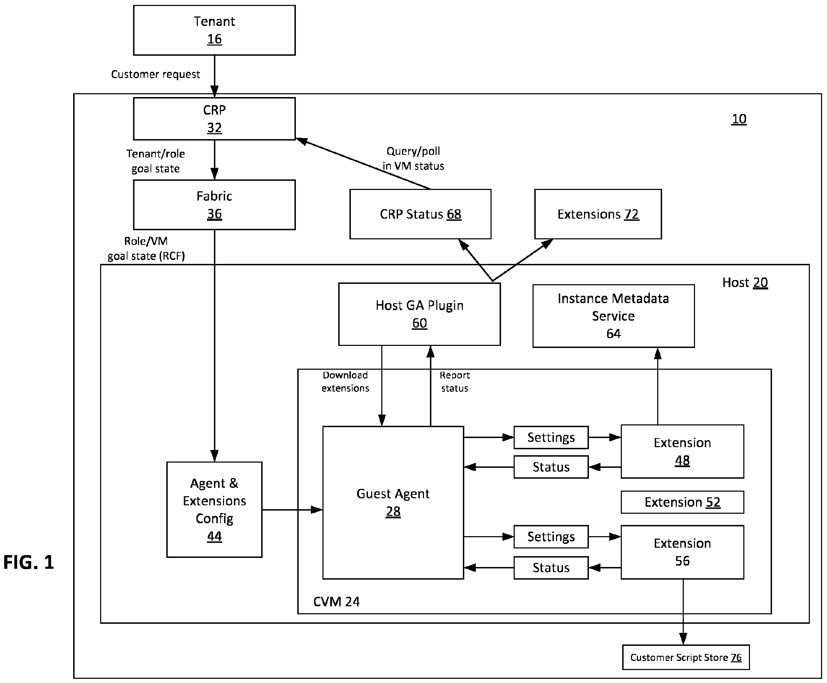

Referring now to FIG. 1, an example of a CSP environment 10 will be described. CSP environment 10 includes a host 20 including a VM, such as CVM 24, which includes a guest agent 28. As described above, the guest agent 28 runs in the CVM 24 and is used by the tenant 16 to monitor and manage the operation of the CVM 24. In operation, tenant 16 will request a desired functionality provided by an extension. Compute resource provider (CRP) 32 translates the request to a goal state, which is the target state that the CRP 32 instructs the agent 28 to reach. This goal state is a config that is provided and applied to the guest agent 28. The goal state is transferred through fabric 36 to the host 20. Host 20 then communicates with the guest 28 to pass the goal state to the agent 28. Agent 28 then performs the actions indicated by the SVD to reach the requested goal state. Extensions, such as, for example, network watcher agent Linux extension 48 and custom script extension 56 are executed in the agent to enable the agent 28 to reach the goal state. In this configuration, the "trust model," all components of the CSP are trusted by the tenant 16. Agent 28 will accept all goal states received from the wire server 40, and extensions are not encrypted or signed and are accepted by the agent 28.

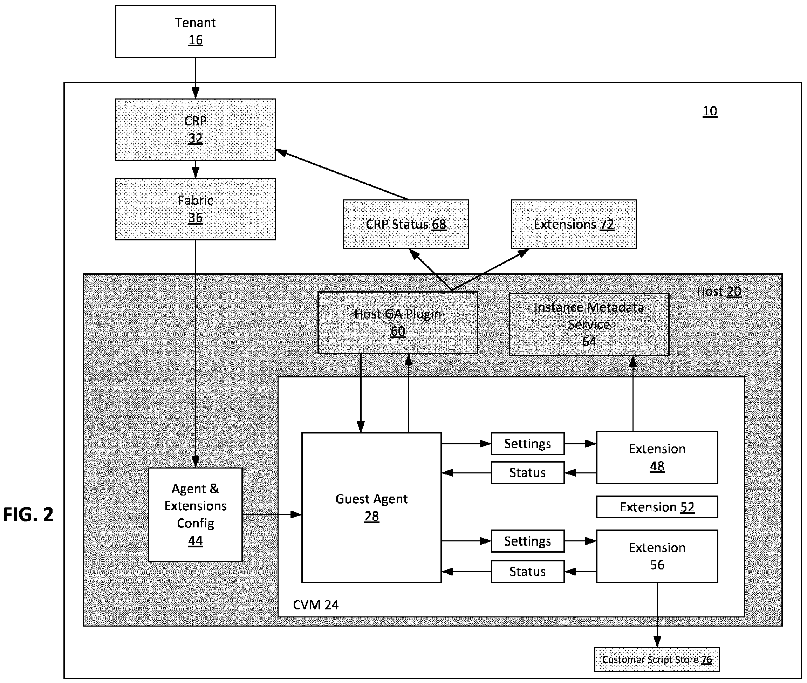

However, in this model, it is possible for malicious actors to corrupt the operation of several of the components of the platform. As shown in FIG. 2, the shaded components are vulnerable to malicious activity which can corrupt the operation of the agent. This includes CRP 32, Fabric 36, wire server 40, Host GAPlugin 60, Instance Metadata Service 64, CRP status block 68, Extensions Private Information Retrieval block 72, Customer Script Store 76, as well as the host 20. These components are vulnerable to, for example, malicious actors on the CSP, sabotaged personnel on the cloud platform, vulnerability exploitations, hackers, and backdoor intrusions, among other vulnerabilities. For example, a malicious administrator could gain access to the host 20 to inject a malicious goal state configuration to run an arbitrary script inside the CVM 24 to access the customer workload running in CVM 24. The customer data could be exfiltrated out of CVM 24 to a destination controlled by the attacker.

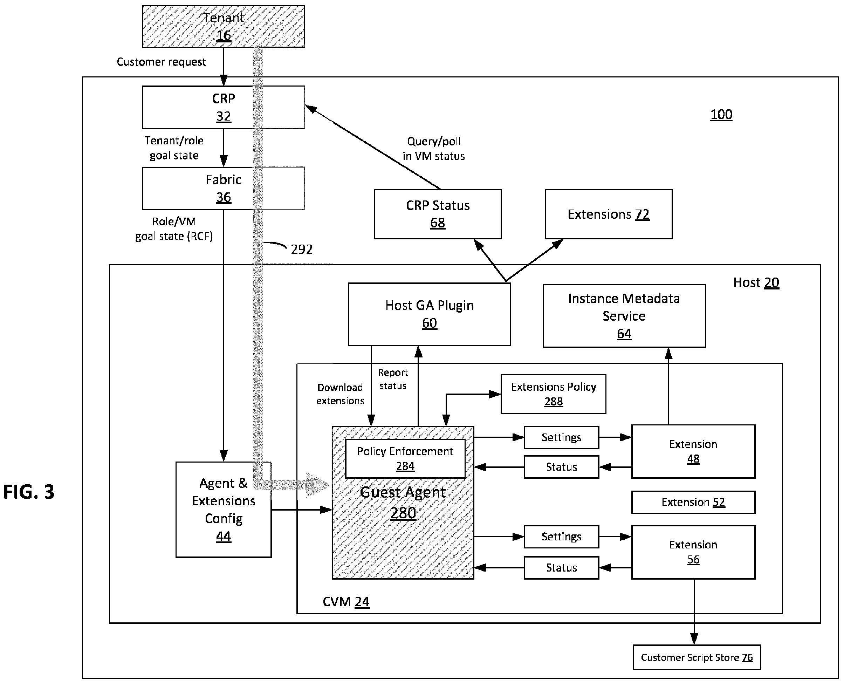

Referring now to FIG. 3, an implementation of the disclosure will be described. In CSP environment 100, components with reference symbols similar to reference symbols in FIGs. 1 and 2 indicate like elements. Guest agent 280 includes an extension policy enforcement agent 284 which receives extension policies requested by the tenant 16 from extension policy repository 288. When guest agent 280 runs inside the CVM 24, it becomes part of the guest Trusted Computing Base (TCB). Anything that is part of the guest TCB will be a trusted component, meaning that the tenant 16 should be able to audit and vet the agent's functionality. Preferably, the agent is open source so that it can be reviewed and audited for all the functionality it offers. It is important for the agents and extensions to keep the data confidentiality from Fabric 36 and the Host 20. This includes uploading any information related to the agents or extensions, such as logs, and telemetry is maintained within CVM 24 and not uploaded outside of the CVM 24.

As indicated by the hashed lines in FIG. 3, only the tenant 16 and the guest agent 280 are trusted components. Communication between the tenant 16 and guest agent 280 is conducted over a cryptographically secure or trusted communication channel 292 using, for example, a PKI framework, in which the tenant 16 possesses the public key and the guest agent 280 possesses the private key. Alternatively, the guest agent 280 possesses the public key and the tenant 16 possesses the private key. As such, only the tenant 16 and the guest agent 280 have access to the encrypted tenant 16 communications to the guest agent 280, which shields the communications from the malicious actors described above.

As set forth above, in an implementation of the disclosure, guest agent 280 includes policy enforcement agent 284 for monitoring and allowing or disallowing the execution of extensions by the guest agent 280 based on the policy set by the tenant 16. Agent 284 running within the CVM 24 is a trusted component is used to enforce the policy set by tenant 16. The agent 284 can be made trusted, for example, by ensuring it is an opensource component which is measured and attestable component. As described above, extensions are components that expose different functionalities and features within the guest agent 280. Tenant 16 can provision a policy/manifest into the guest agent 280 in a secure manner which indicates the list of extensions and identities that the guest agent 280 is allowed or disallowed to execute. Guest agent 280 receives the extension execution policy from tenant 16 over communication channel 292 and applies it to the operation of the guest agent 280 to give full control for the tenant 16 to control which extensions to run and what inputs to accept by the guest agent 280.

In an implementation of the disclosure, tenant 16 communicates the state (or goal state) for the guest agent 280 in the encrypted manner described above over communication channel 292 to keep the state (primarily including extensions, actions, and parameters) confidential and integrity protected from the CSP infrastructure. In the context of virtualization, the term "state" typically refers to the condition or configuration of a virtual machine (VM) at a given point in time. The state of a VM encapsulates information about its current operating system, running applications, data stored in memory, and the status of attached storage devices. When a VM is in a powered-on or running state, it actively processes data and performs tasks as dictated by the installed operating system and applications. Conversely, when a VM is in a powered-off state, it is essentially in a dormant state with no active processing. Virtualization platforms often provide features to capture and manage the state of VMs, allowing users to save or snapshot the current state. This snapshot can then be used to restore the VM to a specific point in time, providing a valuable mechanism for backup, recovery, and system cloning. The ability to manage the state of virtual machines efficiently is a key aspect of virtualization, contributing to flexibility, scalability, and rapid deployment in diverse computing environments.

The policy/manifest described above is provisioned to the guest agent 280 in a secure manner so that it is integrity protected to prevent the CSP from being able to maliciously modify the contents. The policy/manifest, which is also referred as the goal state, is encrypted by tenant 16 using the public key where the corresponding private key is only provisioned to the guest agent 280 during creation. This ensures that only the guest agent 280 inside the CVM 24 can decrypt the goal state and no untrusted components will be able to see or modify the contents of the goal state.

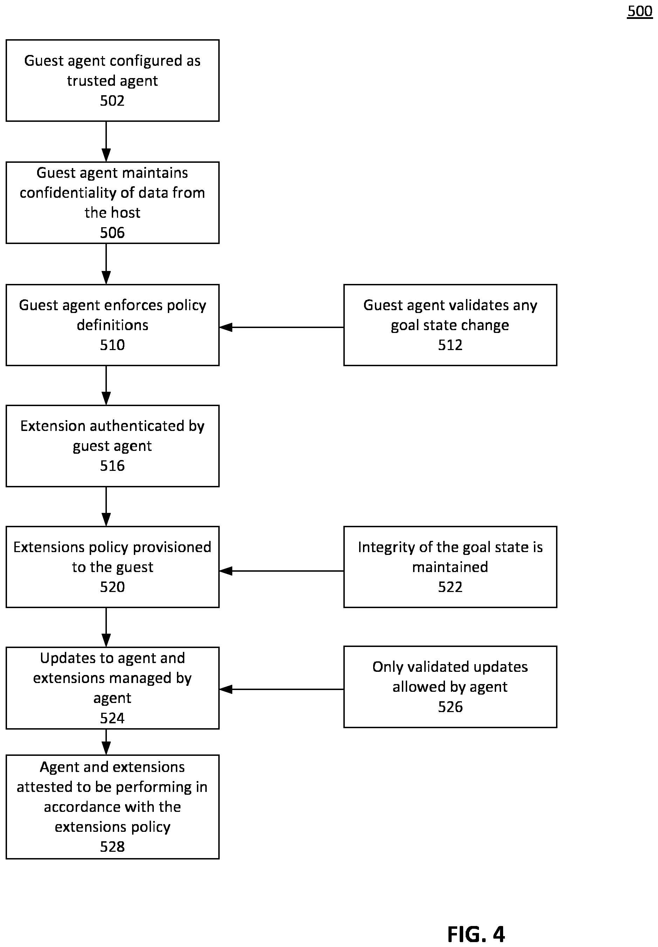

Referring to flowchart 500 of FIG. 4, as described above, the guest agent is configured as a trusted agent, 502 as part of the Trusted Computing Base (TCB). This ensures that the confidentiality of data from the host is maintained within the guest agent 506. Policy enforcement agent 284 enforces policy definitions specified by the tenant 16, 510 and validates any goal state changes, 512. Any extensions to be executed are authenticated by the policy enforcement agent 288, 516, and the authenticated extensions are provisioned to the guest agent, 520. This ensures that the integrity of the goal state is maintained by preventing malicious actors from infiltrating the operation of the guest agent with non-authorized extensions, 522. Any updates to the guest agent and extensions are also managed and authenticated by the policy enforcement agent, 524, so that only validated updates and extensions are allowed to be executed by the guest agent, 526. Since the guest agent 280 is included in the TCB, the statuses of the guest agent and any extensions are monitored by the policy enforcement agent 284, to ensure that the guest agent and the required extensions are performing in accordance with the extensions policy requested by the tenant 16, 528.

Based on the foregoing, implementations of the disclosure provide a secure virtual machine configuration system and method in which a guest agent within a virtual machine of a host in a cloud service provider environment is configured as a trusted agent. The tenant that controls the virtual machine is also trusted and all other components in the cloud service provider environment are treated as being untrusted. A cryptographically secure communication channel is established between the tenant and the guest agent such that all communications therebetween remain confidential with regard to the other components in the CSP environment. Further, the guest agent incudes a policy enforcement agent that receives policy instructions from the tenant regarding which extensions are allowed to be executed by the guest agent and which are not allowed to be executed. This acts to maintain the integrity of the state requested by the tenant and prevents malicious actors on the CSP environment from accessing and corrupting the guest agent and/or accessing the confidential information exchanged between the tenant and guest agent. While an implementation of the disclosure has been described as including a confidential virtual machine, it should be understood that use of a confidential virtual machine is not required and that a non-confidential virtual machine may also be implemented in the system.

As described above, in an implementation of the disclosure, a secure virtual machine configuration system includes a host device implemented in a cloud service provider environment a virtual machine implemented on the host, and a guest agent configured within the virtual machine. The guest agent includes a policy enforcement agent configured to monitor policies received therein from a tenant device and allow execution of software components that are specified within the policy enforcement agent. In another implementation of the disclosure, a method of securely configuring a virtual machine includes providing a host device in a cloud service provider environment, hosting a virtual machine on the host and configuring a guest agent within the virtual machine. The guest agent includes a policy enforcement agent configured to monitor policies received therein from a tenant device and allow execution of software components that are specified within the policy enforcement agent. In yet another implementation of the disclosure, a method of securely configuring a virtual machine includes providing a host device in a cloud service provider environment, hosting a virtual machine on the host, and configuring a guest agent within the virtual machine. The guest agent receives operating policies from a tenant device over a secure communication channel to prevent other components on the host from intercepting the operating policies.

### System Overview:

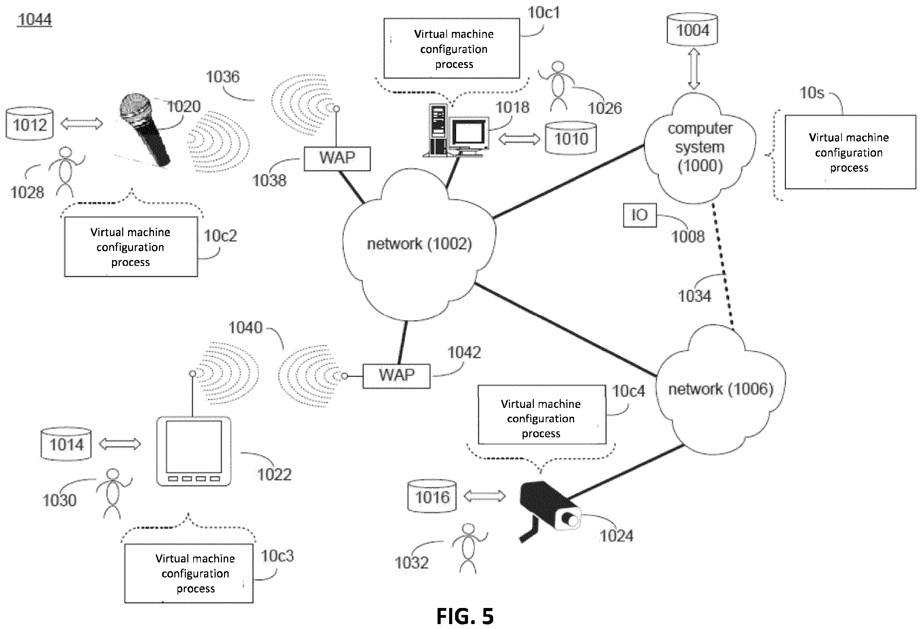

Referring to FIG. 5, there is shown a virtual machine configuration process 1044. virtual machine configuration process 1044 may be implemented as a server-side process, a client-side process, or a hybrid server-side / client-side process. For example, virtual machine configuration process 1044 may be implemented as a purely server-side process via computational cost reduction process 10s. Alternatively, virtual machine configuration process 1044 may be implemented as a purely client-side process via one or more of virtual machine configuration process 10c1, virtual machine configuration process 10c2, virtual machine configuration process 10c3, and virtual machine configuration process 10c4. Alternatively still, virtual machine configuration process 1044 may be implemented as a hybrid server-side / client-side process via virtual machine configuration process 10s in combination with one or more of virtual machine configuration process 10c1, virtual machine configuration process 10c2, virtual machine configuration process 10c3, and virtual machine configuration process 10c4.

Accordingly, virtual machine configuration process 1044 as used in this disclosure may include any combination of virtual machine configuration process 1044, virtual machine configuration process 10c1, virtual machine configuration process 10c2, virtual machine configuration process 10c3, and virtual machine configuration process 10c4.

Virtual machine configuration process 10s may be a server application and may reside on and may be executed by a computer system 1000, which may be connected to network 1002 (e.g., the Internet or a local area network). Computer system 1000 may include various components, examples of which may include but are not limited to: a personal computer, a server computer, a series of server computers, a mini computer, a mainframe computer, one or more Network Attached Storage (NAS) systems, one or more Storage Area Network (SAN) systems, one or more Platform as a Service (PaaS) systems, one or more Infrastructure as a Service (IaaS) systems, one or more Software as a Service (SaaS) systems, a cloud-based computational system, and a cloud-based storage platform.

A SAN includes one or more of a personal computer, a server computer, a series of server computers, a minicomputer, a mainframe computer, a RAID device and a NAS system. The various components of computer system 1000 may execute one or more operating systems.

The instruction sets and subroutines of computational cost reduction process 10s, which may be stored on storage device 1004 coupled to computer system 1000, may be executed by one or more processors (not shown) and one or more memory architectures (not shown) included within computer system 1000. Examples of storage device 1004 may include but are not limited to: a hard disk drive; a RAID device; a random-access memory (RAM); a read-only memory (ROM); and all forms of flash memory storage devices.

Network 1002 may be connected to one or more secondary networks (e.g., network 1004), examples of which may include but are not limited to: a local area network; a wide area network; or an intranet, for example.

Various IO requests (e.g., IO request 1008) may be sent from virtual machine configuration process 10s, virtual machine configuration process 10c1, virtual machine configuration process 10c2, virtual machine configuration process 10c3 and/or virtual machine configuration process 10c4 to computer system 1000. Examples of IO request 1008 may include but are not limited to data write requests (i.e., a request that content be written to computer system 1000) and data read requests (i.e., a request that content be read from computer system 1000).

The instruction sets and subroutines of virtual machine configuration process 10c1, virtual machine configuration process 10c2, virtual machine configuration process 10c3 and/or computational cost reduction process 10c4, which may be stored on storage devices 1010, 1012, 1014, 1016 (respectively) coupled to client electronic devices 1018, 1020, 1022, 1024 (respectively), may be executed by one or more processors (not shown) and one or more memory architectures (not shown) incorporated into client electronic devices 1018, 1020, 1022, 1024 (respectively). Storage devices 1010, 1012, 1014, 1016 may include but are not limited to: hard disk drives; optical drives; RAID devices; random access memories (RAM); read-only memories (ROM), and all forms of flash memory storage devices. Examples of client electronic devices 1018, 1020, 1022, 1024 may include, but are not limited to, personal computing device 1018 (e.g., a smart phone, a personal digital assistant, a laptop computer, a notebook computer, and a desktop computer), audio input device 1020 (e.g., a handheld microphone, a lapel microphone, an embedded microphone (such as those embedded within eyeglasses, smart phones, tablet computers and/or watches) and an audio recording device), display device 1022 (e.g., a tablet computer, a computer monitor, and a smart television), a hybrid device (e.g., a single device that includes the functionality of one or more of the above-references devices; not shown), an audio rendering device (e.g., a speaker system, a headphone system, or an earbud system; not shown), and a dedicated network device (not shown).

Users 1026, 1028, 1030, 1032 may access computer system 1000 directly through network 1002 or through secondary network 1006. Further, computer system 1000 may be connected to network 1002 through secondary network 1006, as illustrated with link line 1034.

The various client electronic devices (e.g., client electronic devices 1018, 1020, 1022, 1024) may be directly or indirectly coupled to network 1002 (or network 1006). For example, personal computing device 1018 is shown directly coupled to network 1002 via a hardwired network connection. Further, machine vision input device 1024 is shown directly coupled to network 1006 via a hardwired network connection. Audio input device 1022 is shown wirelessly coupled to network 1002 via wireless communication channel 1036 established between audio input device 1020 and wireless access point (i.e., WAP) 1038, which is shown directly coupled to network 1002. WAP 1038 may be, for example, an IEEE 802.11a, 802.11b, 802.11g, 802.11n, Wi-Fi, and/or any device that is capable of establishing wireless communication channel 1036 between audio input device 1020 and WAP 1038. Display device 1022 is shown wirelessly coupled to network 1002 via wireless communication channel 1040 established between display device 1022 and WAP 1042, which is shown directly coupled to network 1002.

The various client electronic devices (e.g., client electronic devices 1018, 1020, 1022, 1024) may each execute an operating system, wherein the combination of the various client electronic devices (e.g., client electronic devices 1018, 1020, 1022, 1024) and computer system 1000 may form modular system 1044.

### General:

As will be appreciated by one skilled in the art, the present disclosure may be embodied as a method, a system, or a computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium having computer-usable program code embodied in the medium.

Any suitable computer usable or computer readable medium may be used. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object-oriented programming language. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet.

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general-purpose computer / special purpose computer / other programmable data processing apparatus, such that the instructions, which execute via the processor of the computer or other programmable data processing apparatus, create means for implementing the functions/acts specified in the flowchart and/or block diagram block or blocks.

These computer program instructions may also be stored in a computer-readable memory that may direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, not at all, or in any combination with any other flowcharts depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

A number of implementations have been described. Having thus described the disclosure of the present application in detail and by reference to embodiments thereof, it will be apparent that modifications and variations are possible without departing from the scope of the disclosure defined in the appended claims.

### The following is a list of further preferred embodiments of the invention:

Embodiment 1. A secure virtual machine configuration system comprising:
   a host device implemented in a cloud service provider environment;
   a virtual machine implemented on the host; and
   a guest agent configured within the virtual machine, the guest agent including a policy enforcement agent configured to monitor policies received therein from a tenant device over a secure communication channel between the tenant and the guest agent and to allow execution of software components that are specified within the policy enforcement agent.
Embodiment 2. The secure virtual machine configuration system of embodiment 1 wherein the tenant device is configured to transmit policies to the guest agent indicating a desired state of the guest agent.
Embodiment 3. The secure virtual machine configuration system of embodiment 2 wherein the virtual machine comprises a confidential virtual machine (CVM).
Embodiment 4. The secure virtual machine configuration system of embodiment 2 wherein the secure communication channel includes a PKI framework.
Embodiment 5. The secure virtual machine configuration system of embodiment 1 wherein the policy enforcement agent is configured to deny operation of software components not specified within the policy enforcement agent.
Embodiment 6. The secure virtual machine configuration system of embodiment 1 wherein the guest agent is configured as a trusted agent.
Embodiment 7. The secure virtual machine configuration system of embodiment 3 further including an extensions policy repository in the CVM for storing extension policies for access by the guest agent.
Embodiment 8. A computer-implemented method, executed on a computing device, comprising:
   providing a host device in a cloud service provider environment;
   hosting a virtual machine on the host; and
   configuring a guest agent within the virtual machine, the guest agent including a policy enforcement agent configured to monitor policies received therein from a tenant device and allow execution of software components that are specified within the policy enforcement agent.
Embodiment 9. The method of embodiment 8 wherein policies received from the tenant device by the guest agent indicate a desired state of the guest agent.
Embodiment 10. The method of embodiment 9 wherein communications between the tenant and the guest agent are implemented over a secure communication channel.
Embodiment 11. The method of embodiment 10 wherein the virtual machine comprises a confidential virtual machine.
Embodiment 12. The method of embodiment 10 wherein the secure communication channel includes a PKI framework.
Embodiment 13. The method of embodiment 8 further comprising the policy enforcement denying operation of software components not specified within the policy enforcement agent.
Embodiment 14. A computer program product residing on a non-transitory computer readable medium having a plurality of instructions stored thereon which, when executed by a processor, cause the processor to perform operations comprising:
   providing a host device in a cloud service provider environment;
   hosting a virtual machine on the host; and
   configuring a guest agent within the virtual machine, the guest agent receiving operating policies from a tenant device over a secure communication channel and preventing other components on the host from intercepting the operating policies.
Embodiment 15. The computer program product of embodiment 14 further comprising the guest agent including a policy enforcement agent configured to monitor policies received therein from the tenant device over the secure communication channel and allowing execution of software components that are specified within the policy enforcement agent.
Embodiment 16. The method of embodiment 14 wherein policies received from the tenant device by the guest agent indicate a desired state of the guest agent.
Embodiment 17. The method of embodiment 14 wherein the virtual machine comprises a confidential virtual machine.
Embodiment 18. The method of embodiment 15 wherein the secure communication channel includes a PKI framework.
Embodiment 19. The method of embodiment 15 further comprising the policy enforcement denying operation of software components not specified within the policy enforcement agent.
Embodiment 20. The method of embodiment 19 wherein the guest agent is configured as a trusted agent.

## Claims

1. A secure virtual machine configuration system comprising:
a host device implemented in a cloud service provider environment;
a virtual machine implemented on the host; and
a guest agent configured within the virtual machine, the guest agent including a policy enforcement agent configured to monitor policies received therein from a tenant device over a secure communication channel between the tenant and the guest agent and to allow execution of software components that are specified within the policy enforcement agent.

2. The secure virtual machine configuration system of claim 1 wherein the tenant device is configured to transmit policies to the guest agent indicating a desired state of the guest agent.

3. The secure virtual machine configuration system of claim 2 wherein the virtual machine comprises a confidential virtual machine (CVM).

4. The secure virtual machine configuration system of claim 2 wherein the secure communication channel includes a PKI framework.

5. The secure virtual machine configuration system of claim 1 wherein the policy enforcement agent is configured to deny operation of software components not specified within the policy enforcement agent.

6. The secure virtual machine configuration system of claim 1 wherein the guest agent is configured as a trusted agent.

7. The secure virtual machine configuration system of claim 3 further including an extensions policy repository in the CVM for storing extension policies for access by the guest agent.

8. A computer-implemented method, executed on a computing device, comprising:
providing a host device in a cloud service provider environment;
hosting a virtual machine on the host; and
configuring a guest agent within the virtual machine, the guest agent including a policy enforcement agent configured to monitor policies received therein from a tenant device and allow execution of software components that are specified within the policy enforcement agent.

9. The method of claim 8 wherein policies received from the tenant device by the guest agent indicate a desired state of the guest agent.

10. The method of claim 9 wherein communications between the tenant and the guest agent are implemented over a secure communication channel.

11. The method of claim 10 wherein the virtual machine comprises a confidential virtual machine.

12. The method of claim 10 wherein the secure communication channel includes a PKI framework.

13. The method of claim 8 further comprising the policy enforcement denying operation of software components not specified within the policy enforcement agent.

14. A computer program product residing on a non-transitory computer readable medium having a plurality of instructions stored thereon which, when executed by a processor, cause the processor to perform operations comprising:
providing a host device in a cloud service provider environment;
hosting a virtual machine on the host; and
configuring a guest agent within the virtual machine, the guest agent receiving operating policies from a tenant device over a secure communication channel and preventing other components on the host from intercepting the operating policies.

15. The computer program product of claim 14 further comprising the guest agent including a policy enforcement agent configured to monitor policies received therein from the tenant device over the secure communication channel and allowing execution of software components that are specified within the policy enforcement agent.
